# EUROPEAN PATENT SPECIFICATION

(11) **EP 2 989 371 B1**
(45) Date of publication and mention of the grant of the patent: **01.12.2021**
(21) Application number: 14725915.4
(22) Date of filing: 25.04.2014
(51) Int. Cl.: F17C 13/04

(54) **LEVER VALVE**
HEBELVENTIL
ROBINET À LEVIER

(30) Priority: 25.04.2013 GB 201307473
(43) Date of publication of application: 02.03.2016
(73) Proprietor: Linde GmbH, 82049 Pullach (DE)
(72) Inventor: SPRATLEY, Jonathan, St. Ives Cambridgeshire PE27 4LG (GB)
(74) Representative: Lu, Jing
(86) International application number: PCT/GB2014/000157
(87) International publication number: WO 2014/174236

(56) References cited:
- FR-A1- 2 865 263
- US-A1- 2012 175 375
- None

## Description

The present invention relates to a lever operated valve. Specifically, the present invention relates to a lever operated valve in which the lever provides protection for a device mounted in or on the valve body, the device having a visual display.

Cylinder valve assemblies for gas cylinders and the like are well known. Traditionally, cylinder valves are provided with a hand wheel which is operable by rotation to open and close the valve. More recently, cylinder valves which use levers to operate the valve mechanism have become known. Such a cylinder valve assembly is disclosed in US 5,975,121.

In lever operated valve designs, the length of the levers, and the arcs described by their opening/closing, are limited by the presence of valve guards and external components of the valve body.

When in the closed position, levers often lie in close proximity to any sensitive devices such as pressure gauges, or other monitoring/display devices, the high pressure outlet, and any burst disc. The lever must therefore be positioned carefully in order to allow easy access to the lever for operation while providing adequate protection against accidental opening and damage due to impact.

It is advantageous for valves to comprise instrumentation which tell users about the contents, pressure, temperature etc. of the cylinder. One such commonly used device is an analogue or digital pressure gauge. In lever operated valve designs, such gauges are commonly placed in the centre of the valve body, facing the user, with the lever positioned off to one side. This makes the valve "handed" and therefore harder to open for either left or right handed people.

A valve design in which the pressure gauge and lever are both centrally mounted is disclosed in US 2012/0175375. In this design the lever receives the pressure gauge within an opening formed in the lever so that the pressure gauge may be seen when the lever is in the downward, or closed, position.

The present invention provides a valve assembly according to claim 1.

The present invention is advantageous as it allows central mounting of both the lever and the gauge and also provides protection for the pressure gauge against impacts which might damage the visual display of the pressure gauge.

At least a portion of the lever abuts at least a portion of the at least one device when the lever is in the closed position. This provides positive feedback of lever closure for the user and also provides an additional point of stability for the lever. Preferably, the lever abuts at least a portion of the visual display when in the closed position.

The visual display is recessed within the valve body and at least a portion of the lever abuts at least a portion of the valve body when the lever is in the closed position. This provides positive feedback of closed position for the end user and also provides additional protection for the visual display.

Preferably, at least a portion of the lever abuts at least a portion of the valve body in the vicinity of the valve body surrounding the visual display when the lever is in the closed position.

In an alternative preferred embodiment, the at least one device protrudes from the valve body.

In one embodiment, the lever substantially obscures the visual display from view when the lever is in the closed position. This provides positive visual confirmation to the user that the lever is in the closed position. In counterpoint to this, the visual display is visible only when the lever is in the open position again, giving confirmation to the user that the lever is in the open position (or not fully closed).

In a further alternative embodiment, the lever comprises an opening through which the visual display may be viewed when the lever is in the closed position. This allows the user to ascertain the pressure within the gas cylinder without having to open the valve.

Preferably, the opening contains, or is covered by, a protective member to protect the gauge and visual display from impact or accidental damage.

The protective member preferably comprises a transparent member to allow the visual display to be easily viewed. In an alternative preferred embodiment, the lever comprises a transparent material.

Examples of the invention will now be described with reference to the following drawings in which:
Figure 1 shows an isometric view of a lever valve assembly according to the present invention;
Figure 2 shows the valve assembly of Figure 1 in the open position; and
Figure 3 shows an alternative embodiment of a valve assembly according to the present invention.

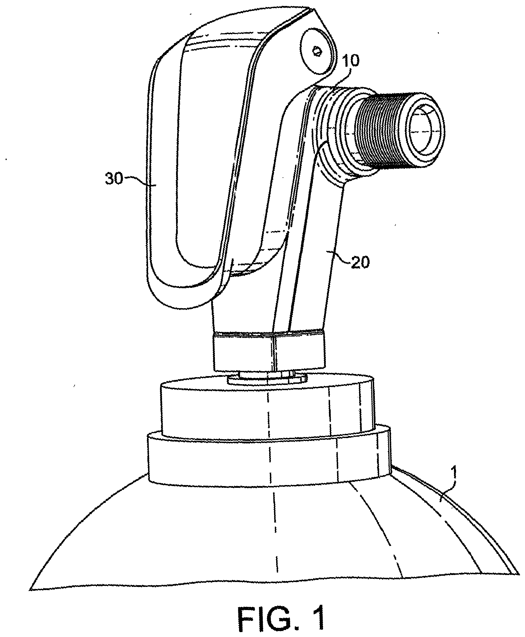

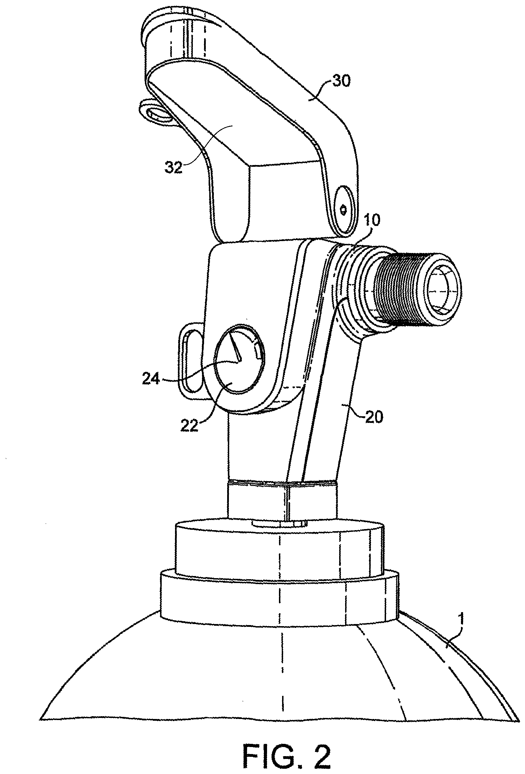

Referring to Figure 1, a gas pressure vessel 1 comprising a valve assembly 10 is shown. The valve assembly comprises valve body 20 and lever 30 for actuating the valve mechanism (not shown). The valve assembly 10 further comprises a pressure gauge 22 having a visual display 24 (see Figure 2). Although not shown in the drawings, it will be understood by persons skilled in the art that the pressure gauge is in fluid communication with the interior of the pressure vessel 1 such that the visual display shows the pressure within the pressure vessel 1. This is standard in the art and is not described in detail here.

The valve body 20 comprises a brass casting 23 which is substantially covered by a plastic casework 21. In this embodiment, the visual display 24 of the pressure gauge 22 is substantially flush with the exterior surface of the casework 21. In an alternative design, the pressure gauge 22 may be recessed within the casework 21 or brass casting 23, or may protrude from the casework 21 or brass casting 23. The casework 21 is not essential and may be omitted.

As shown in Figures 1 and 2, the visual display 24 of the pressure gauge 22 is located behind the lever 30 when the lever is in the closed position (as illustrated in Figure 1). When in the closed position, the rear surface 32 of the lever 30 abuts the visual display 24. However, this is not essential and, as mentioned above, the visual display 24 and/or the entire pressure gauge 22 may be recessed into the valve body 20. In this case, the valve body 20 in the region surrounding the pressure gauge 22 may abut the rear surface 32 of the lever 30 when the lever 20 is in the closed position.

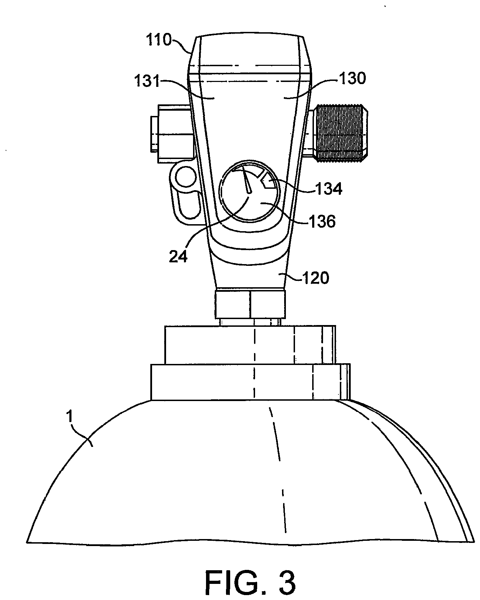

Figure 3 shows an alternative valve assembly 110 mounted on a pressure vessel 1. The valve assembly 110 comprises a valve body 120 and lever 130. The lever 130 comprises an opening 134 which, in this example, contains a transparent member 136 which allows the visual display 24 to be viewed through the lever 130. The rear surface of the protective member 136 abuts the visual display 24. However, in another embodiment, the visual display 24 and/or pressure gauge 22 may be recessed such that there is no contact between the rear surface of the protective member 136 and the visual display. In this case, the rear surface (not shown) of the lever 130 may abut the valve body in the vicinity surrounding the recessed gauge 22.

The protective member 136 may be made of any suitable material such as Perspex^{RTM}, other PMMAs or transparent grades of polycarbonates. Alternatively, the protective member 136 may comprise a wire mesh or any other suitable covering, or may be omitted. The protective member 136 may cover the whole of the external surface 131, or internal surface (not shown) of the lever 130.

In an alternative embodiment (not shown) the lever 130 may comprise a transparent material such that the visual display 24 is visible through the lever when the lever is in the closed position.

It is not necessary in any of the above embodiments that the lever 30, 130 abut any part of the valve body 20, 120 or gauge 22. It is envisaged that the gauge 22 may be located behind the lever 30, 130 without actually coming into contact with the lever 30, 130. In the context of this document, behind is to be understood to mean behind the rear surface of the lever 30, 130 and not, for example, on the opposite side of the valve body 20, 120 to the lever 30, 130.

Although the invention has been described with reference to a mechanical pressure gauge 22 having an analogue display, it is to be understood that the present invention is also directed to any other type of device having a visual display that might be provided on or in the valve body 20. Both analogue and digital devices are contemplated or any combination thereof. It is envisaged that there may be more than one such device located on or in the valve body 20 and located behind the lever 30, 130.

## Claims

1. A valve assembly (10) comprising a valve body (20) and a centrally mounted lever (30) for actuating the valve, the valve body (20) comprising at least one centrally mounted device (22) having a visual display (24), wherein the at least one device (22) is located such that, when the lever (30) is in a closed position, the visual display (24) is located behind the rear surface (32) of the lever (30) and **characterised in that** the visual display (24) is recessed within the valve body (20) and **in that** at least a portion of the lever (30) abuts at least a portion of the valve body (20) when the lever (30) is in the closed position.

2. A valve assembly (10) as claimed in claim 1, wherein at least a portion of the lever (30) abuts at least a portion of the at least one device (22) when the lever (30) is in the closed position.

3. A valve assembly (10) as claimed in claim 1 or 2, wherein at least a portion of the lever (30) abuts at least a portion of the visual display (24) when the lever (30) is in the closed position.

4. A valve assembly (10) as claimed in claim 1, wherein at least a portion of the lever (30) abuts at least a portion of the valve body (20) in the vicinity of the valve body (20) surrounding the visual display (24) when the lever (30) is in the closed position.

5. A valve assembly (10) as claimed in claim 1, wherein the at least one device (22) protrudes from the valve body (20).

6. A valve assembly (10) as claimed in any preceding claim, wherein the lever (30) substantially obscures the visual display (24) from view when the lever (30) is in the closed position.

7. A valve assembly (10) as claimed in any one of claims 1 to 5, wherein the lever (30) comprises an opening (134) through which the visual display (24) may be viewed when the lever (30) is in the closed position.

8. A valve assembly (10) as claimed in claim 7, wherein the opening (134) contains, or is covered by, a protective member (136).

9. A valve assembly (10) as claimed in claim 6, wherein the protective member (136) comprises a transparent member.

10. A valve assembly (10) as claimed in any one of claims 1 to 5, wherein the lever (30) comprises a transparent material.

## Patentansprüche

1. Ventilanordnung (10), umfassend einen Ventilkörper (20) und einen zentral angebrachten Hebel (30) zum Betätigen des Ventils, wobei der Ventilkörper (20) mindestens eine zentral angebrachte Vorrichtung (22) mit einer visuellen Anzeige (24) umfasst, wobei die mindestens eine Vorrichtung (22) so angeordnet ist, dass, wenn sich der Hebel (30) in einer geschlossenen Stellung befindet, die visuelle Anzeige (24) hinter der hinteren Oberfläche (32) des Hebels (30) angeordnet ist, und **dadurch gekennzeichnet, dass** die visuelle Anzeige (24) innerhalb des Ventilkörpers (20) vertieft ist, und **dadurch, dass** zumindest ein Abschnitt des Hebels (30) an zumindest einem Abschnitt des Ventilkörpers (20) anliegt, wenn sich der Hebel (30) in der geschlossenen Stellung befindet.

2. Ventilanordnung (10) nach Anspruch 1, wobei zumindest ein Abschnitt des Hebels (30) an zumindest einen Abschnitt der mindestens einen Vorrichtung (22) anliegt, wenn sich der Hebel (30) in der geschlossenen Stellung befindet.

3. Ventilanordnung (10) nach Anspruch 1 oder 2, wobei zumindest ein Abschnitt des Hebels (30) an zumindest einen Abschnitt der visuellen Anzeige (24) anliegt, wenn sich der Hebel (30) in der geschlossenen Stellung befindet.

4. Ventilanordnung (10) nach Anspruch 1, wobei zumindest ein Abschnitt des Hebels (30) an zumindest einem Abschnitt des Ventilkörpers (20) in der Nähe des Ventilkörpers (20) anliegt, der die visuelle Anzeige (24) umgibt, wenn sich der Hebel (30) in der geschlossenen Stellung befindet.

5. Ventilanordnung (10) nach Anspruch 1, wobei die mindestens eine Vorrichtung (22) aus dem Ventilkörper (20) herausragt.

6. Ventilanordnung (10) nach einem der vorstehenden Ansprüche, wobei der Hebel (30) die visuelle Anzeige (24) im Wesentlichen vor der Sicht verdeckt, wenn sich der Hebel (30) in der geschlossenen Stellung befindet.

7. Ventilanordnung (10) nach einem der Ansprüche 1 bis 5, wobei der Hebel (30) eine Öffnung (134) umfasst, durch welche die visuelle Anzeige (24) gesehen werden kann, wenn sich der Hebel (30) in der geschlossenen Stellung befindet.

8. Ventilanordnung (10) nach Anspruch 7, wobei die Öffnung (134) ein Schutzelement (136) enthält oder davon bedeckt ist.

9. Ventilanordnung (10) nach Anspruch 6, wobei das Schutzelement (136) ein transparentes Element umfasst.

10. Ventilanordnung (10) nach einem der Ansprüche 1 bis 5, wobei der Hebel (30) ein transparentes Material umfasst.

## Revendications

1. Ensemble soupape (10) comprenant un corps de soupape (20) et un levier monté de manière centrale (30) pour actionner la soupape, le corps de soupape (20) comprenant au moins un dispositif monté de manière centrale (22) doté d'un affichage visuel (24), dans lequel l'au moins un dispositif (22) est situé de telle sorte que, lorsque le levier (30) est dans une position fermée, l'affichage visuel (24) est situé derrière la surface arrière (32) du levier (30) et **caractérisé en ce que** l'affichage visuel (24) est en retrait à l'intérieur du corps de soupape (20) et **en ce qu'**au moins une partie du levier (30) vient en butée contre au moins une partie du corps de soupape (20) lorsque le levier (30) est dans la position fermée.

2. Ensemble soupape (10) selon la revendication 1, dans lequel au moins une partie du levier (30) vient en butée contre au moins une partie de l'au moins un dispositif (22) lorsque le levier (30) est dans la position fermée.

3. Ensemble soupape (10) selon la revendication 1 ou 2, dans lequel au moins une partie du levier (30) vient en butée contre au moins une partie de l'affichage visuel (24) lorsque le levier (30) est dans la position fermée.

4. Ensemble soupape (10) selon la revendication 1, dans lequel au moins une partie du levier (30) vient en butée contre au moins une partie du corps de soupape (20) à proximité du corps de soupape (20) entourant l'affichage visuel (24) lorsque le levier (30) est dans la position fermée.

5. Ensemble soupape (10) selon la revendication 1, dans lequel l'au moins un dispositif (22) fait saillie depuis le corps de soupape (20).

6. Ensemble soupape (10) selon une quelconque revendication précédente, dans lequel le levier (30) occulte sensiblement l'affichage visuel (24) de toute vue lorsque le levier (30) est dans la position fermée.

7. Ensemble soupape (10) selon l'une quelconque des revendications 1 à 5, dans lequel le levier (30) comprend une ouverture (134) à travers laquelle l'affichage visuel (24) peut être visualisé lorsque le levier (30) est dans la position fermée.

8. Ensemble soupape (10) selon la revendication 7, dans lequel l'ouverture (134) contient ou est couverte par un élément de protection (136).

9. Ensemble soupape (10) selon la revendication 6, dans lequel l'élément de protection (136) comprend un élément transparent.

10. Ensemble soupape (10) selon l'une quelconque des revendications 1 à 5, dans lequel le levier (30) comprend un matériau transparent.
